# EUROPEAN PATENT APPLICATION

(11) **EP 2 256 901 A2**
(43) Date of publication of application: **01.12.2010**
(21) Application number: 10250989.0
(22) Date of filing: 27.05.2010
(51) Int. Cl.: H02K 1/14

(54) **Molded motor, and electric motor vehicle**

(30) Priority: 28.05.2009 JP 2009129398
(71) Applicant: Sanyo Electric Co., Ltd., Osaka 570-8677 (JP)
(72) Inventor: Sagara, Hiroaki, Moriguchi City Osaka 570-8677 (JP); Taguchi, Kenji, Moriguchi City Osaka 570-8677 (JP); Ueta, Tetsuji, Moriguchi City Osaka 570-8677 (JP); Nagao, Takeshi, Moriguchi City Osaka 570-8677 (JP); Uchino, Takashi, Moriguchi City Osaka 570-8677 (JP)
(74) Representative: Calderbank, Thomas Roger

(57) **Abstract**

A molded motor includes: a stator of columnar shape; and a motor case provided on an end face of the stator. The stator includes a plurality of yoke segments arranged in a circumferential direction of the stator, and a molded portion configured to mold the plurality of yoke segments. The motor case has an outer wall provided along outer circumferences of the plurality of yoke segments. The outer wall is lower in height in an axial direction of the stator than the molded portion.

## Description

This application is based upon and claims the benefit of priority from prior Japanese Patent Application No.2009-129398, filed on May 28, 2009; the entire contents of which are incorporated herein by reference.

The present invention relates to a molded motor including a resin-molded stator and an electric motor vehicle.

Conventionally, a molded motor has been widely used as a driving source for an electric motor vehicle or the like. The molded motor includes a stator of columnar shape and a rotor arranged inside the stator.

The stator includes: an annular yoke; multiple teeth arranged inward of the yoke; and a molded portion in which the yoke and the multiple teeth are molded.

The yoke may be divided into multiple yoke segments arranged in a circumferential direction of the stator. There has been known a technique for this case by which outer circumferential portions of the multiple yoke segments are press-fitted in a tubular motor case when the multiple yoke segments and the multiple teeth are molded with resin (see Japanese Patent Application Publication No. 2005-348522).

However, according to the technique disclosed in Patent Literature 1, an entire side surface of the stator is covered with the motor case, and thus the heat radiation of the stator is reduced.

A molded motor of a first aspect includes: a stator of columnar shape; and a motor case provided on an end face of the stator. The stator includes a plurality of yoke segments arranged in a circumferential direction of the stator, and a molded portion configured to mold the plurality of yoke segments. The motor case has an outer wall provided along outer circumferences of the plurality of yoke segments. The outer wall is lower in height in an axial direction of the stator than the molded portion.

According to the molded motor of the first aspect, the height of the outer wall is lower than the height of the molded portion. This makes it possible for the outer circumferential surface of the stator to have the molded portion exposed to the outside. Accordingly, heat generated inside the stator can be radiated directly to the air from the molded portion. Consequently, the heat radiation of the stator can be improved, as compared to a case where the molded portion is covered with a motor case.

In the first aspect, the outer wall is provided annularly in the circumferential direction.

In the first aspect, the outer wall includes an outer-circumference guide portion and a cut-out portion, the outer-circumference guide portion being extended along outer circumferences of two of the plurality of yoke segments, the cut-out portion being continuous with the outer-circumference guide portion. The molded portion is filled into the cut-out portion.

In the first aspect, the motor case includes an end-face guide portion extended along an end face of one of the yoke segments in the axial direction and an end face of a tooth in the axial direction which comes to contact with the one yoke segment.

In the first aspect, the molded motor further includes a terminal box configured to house a power cable. The terminal box includes an end-face guide portion which comes to contact with an end face of one of the yoke segments in the axial direction.

An electric motor vehicle of a second aspect includes: a drive wheel; and a molded motor configured to drive the drive wheel. The molded motor includes a stator of columnar shape, and a motor case provided on an end face of the stator on the drive wheel side. The stator includes a plurality of yoke segments arranged in a circumferential direction of the stator, and a molded portion configured to mold the plurality of yoke segments. The motor case has an outer wall provided along outer circumferences of the plurality of yoke segments. The outer wall is lower in height in an axial direction of the stator than the molded portion.
Fig. 1 is a right side view of an electric motorcycle 100 according to First Embodiment of the present invention.
Fig. 2 is a perspective view of a molded motor 10 according to First Embodiment of the present invention, as viewed from a non-output side of the molded motor 10.
Fig. 3 is a perspective view of the molded motor 10 according to First Embodiment of the present invention, as viewed from an output side of the molded motor 10.
Fig. 4 is a cross sectional view taken along the A-A line of Fig. 3.
Fig. 5 is a perspective view showing a detailed structure of a stator 12 according to First Embodiment of the present invention.
Fig. 6 is a perspective view showing a structure of an outer wall 13G according to First Embodiment of the present invention.
Fig. 7 is a perspective view showing a state in which a first motor case 13 is fitted to a yoke 20 according to First Embodiment of the present invention.
Fig. 8 is a view for explaining a method of manufacturing the stator 12 according to First Embodiment of the present invention.
Fig. 9 is a perspective view showing a state in which a first motor case 13 is fitted to a yoke 20 according to Second Embodiment of the present invention.
Fig. 10 is a cross sectional view taken along the B-B line of Fig. 7.
Fig. 11 is a perspective view showing a state in which a terminal box 15 is fitted into a yoke 20 according to Fourth Embodiment of the present invention.
Fig. 12 is a cross sectional view taken along the C-C line of Fig. 11.

Embodiments of the present invention will be described with reference to the drawings. Note that, in the following description of the drawings, same or similar reference signs denote same or similar elements and portions. In addition, it should be noted that the drawings are schematic and ratios of dimensions and the like are different from actual ones. Therefore, specific dimensions and the like should be determined in consideration of the following description. Moreover, the drawings also include portions having different dimensional relationships and ratios from each other.

### [First Embodiment]

### (Outline Structure of Electric Motor Vehicle)

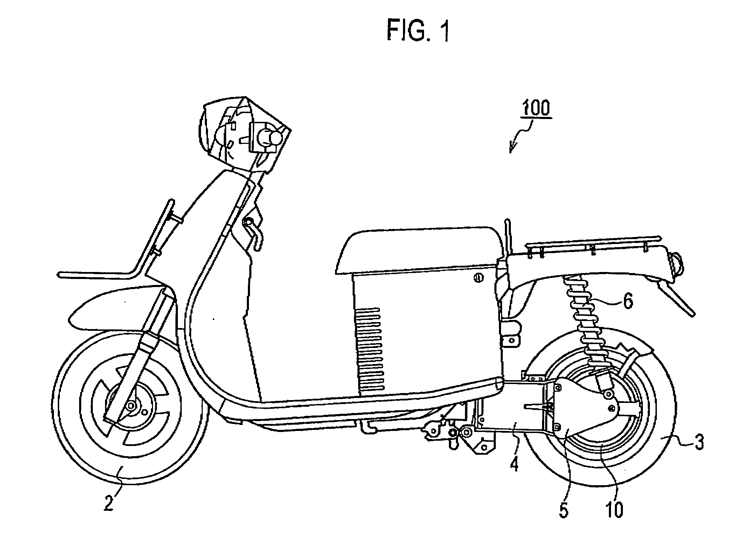

Hereinbelow, an electric motorcycle 100 will be described with reference to the drawings, the electric motorcycle 100 being an electric motor vehicle to which a molded motor 10 according to First Embodiment of the present invention is applied. Fig. 1 is a right side view of the electric motorcycle 100.

As shown in Fig. 1, the electric motorcycle 100 is a so-called under-bone type electric motorcycle, in which a body frame (not shown) is provided on a lower side of the electric motorcycle 100. The electric motorcycle 100 includes a front wheel 2, a rear wheel 3, a swing arm 4, a suspension case 5, a rear suspension 6 and the molded motor 10.

The front wheel 2 is rotatably supported by a front fork. The rear wheel 3 is rotatably supported by the molded motor 10. The rear wheel 3 is an example of a "load" according to the present invention. The swing arm 4 is swingably attached to the body frame.

The suspension case 5 is coupled to a rear end portion of the swing arm 4 and the molded motor 10. The rear suspension 6 is coupled to the suspension case 5 and the body frame.

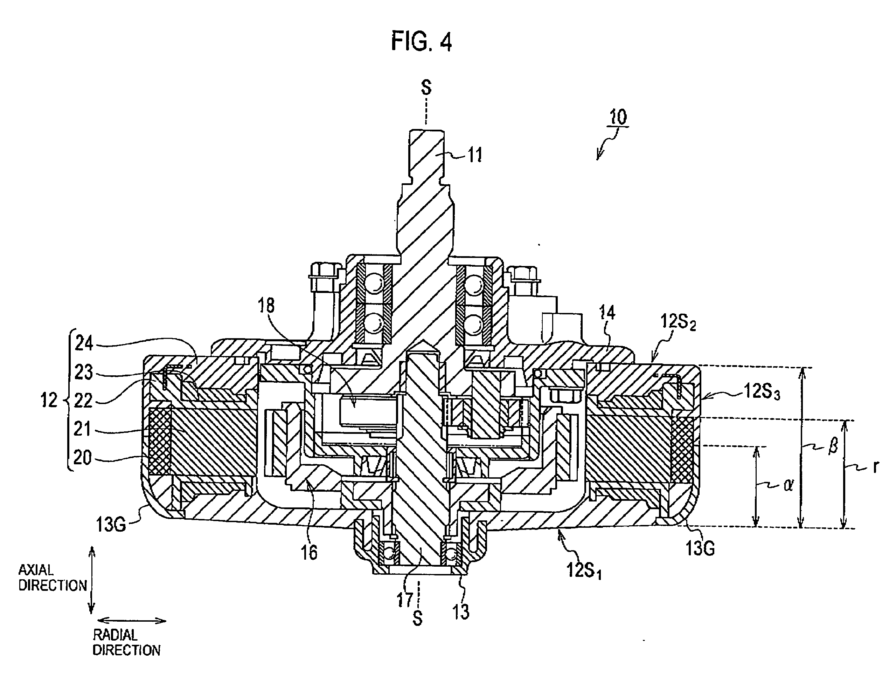

The molded motor 10 is fixed to the rear end portion of the swing arm 4 and the suspension case 5 in such a manner as to be sandwiched therebetween. A driving force of the molded motor 10 is transmitted to the rear wheel 3 via a motor shaft (refer to Fig. 4). The structure of the molded motor 10 will be described later.

Incidentally, a motor power line 9 for supplying power to the molded motor 10 is provided to a front portion of the molded motor 10.

### (Outline Structure of Molded Motor)

Next, an outline structure of the molded motor 10 according to First Embodiment will be described with reference to the drawings. Note that in the following, an "output side" is a rear wheel 3 side of the molded motor 10, while a "non-output side" is an opposite side of the molded motor 10 from the output side.

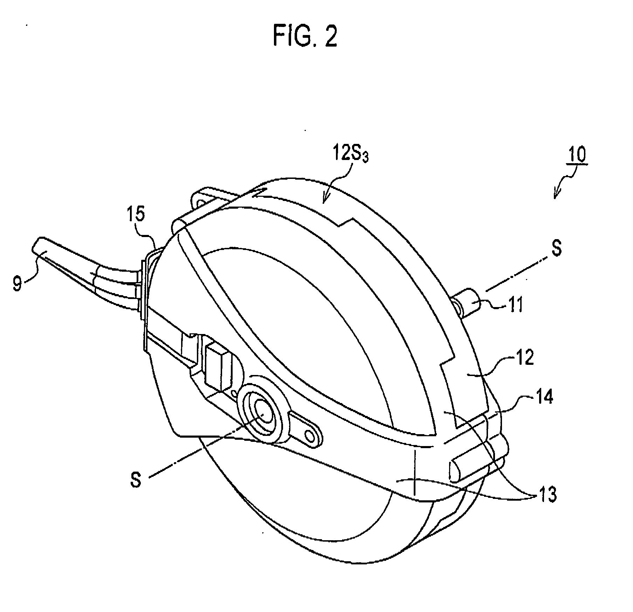

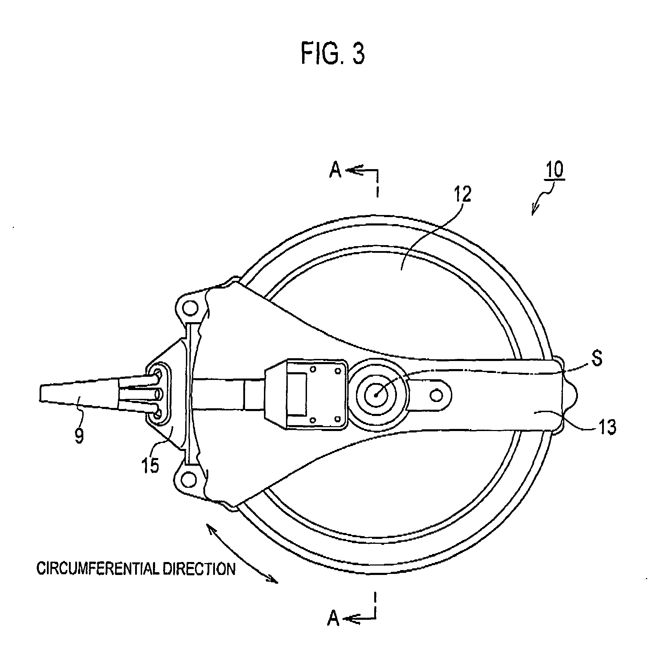

Fig. 2 is a plan view of the molded motor 10, as viewed from the output side. Fig. 3 is a side view of the molded motor 10. Fig. 4 is a plan view of the molded motor 10, as viewed from the non-output side.

As shown in Figs. 2 to 4, the molded motor 10 includes the motor shaft 11, a stator 12, the first motor case 13, a second motor case 14, a terminal box 15, a rotor 16, a gear shaft 17 and a gear 18.

The motor shaft 11 is provided approximately at the center of the stator 12 in a plan view. The motor shaft 11 is inserted into the second motor case 14 and protruded from the stator 12. The motor shaft 11 is configured to drive the rear wheel 3 by rotating about a shaft axis S of the stator 12. The stator 12 is formed into a columnar shape with the shaft axis S as the center.

As shown in Fig. 4, the stator 12 includes a yoke 20, multiple teeth 21, insulating members 22, coils 23, and a molded portion 24. The yoke 20 is formed into a cylindrical shape with its circumference extending in a circumferential direction of the stator 12. The multiple teeth 21 are arranged along an inner circumference of the yoke 20 and come to contact with the yoke 20. The insulating members 22 cover outer circumferences of the teeth 21, respectively. The coils 23 are wound around the insulating members 22, respectively. The molded portion 24 molds the yoke 20, the multiple teeth 21, the insulating members 22 and the coils 23.

As shown Fig. 4, the stator 12 has a first end face 12S₁ of the stator (hereinafter referred to as a first column-end-face 12S₁), a second end face 12S₂ of the stator (hereinafter referred to as a second columm-end-face 12S₂) and an outer circumferential surface 12S₃. The first column-end-face 12S₁ is provided on the non-output side of the stator 12, while the second column-end-face 12S₂ is provided on the output side thereof. The first column-end-face 12S₁ and the second column-end-face 12S₂ are formed of the molded portion 24 and provided approximately perpendicular to an axial direction of the stator 12.

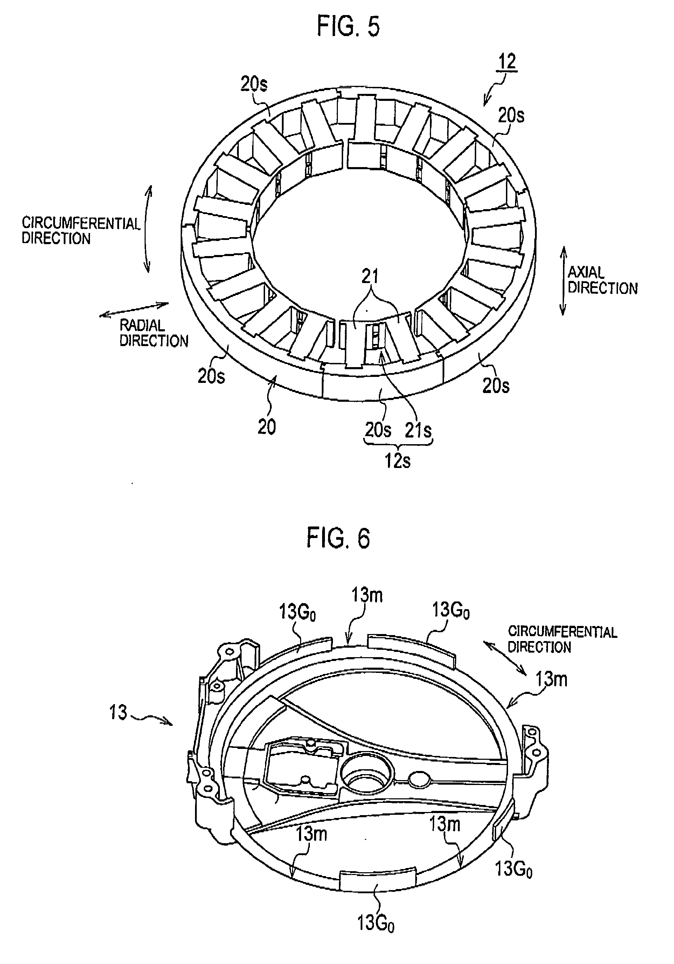

Meanwhile, Fig. 5 is a perspective view showing a detailed structure of the stator 12. Note that structures of components other than the yoke 20 and the multiple teeth 21 are omitted in Fig. 5. As shown in Fig. 5, the stator 12 is divided into multiple yoke segments 20s and teeth segments 21s. The yoke segments 20s and the teeth segments 21s are paired and form stator segments 12s, respectively.

The multiple yoke segments 20s form the yoke 20, and are each formed into an arc shape extending in the circumferential direction of the stator 12. The multiple yoke segments 20s are arranged in the circumferential direction of the stator 12, and are adjacent to each other on their ends.

The multiple teeth segments 21s are each formed of two or four teeth 21 which are coupled in an arc manner in the circumferential direction of the stator 12. The multiple teeth segments 21s are arranged along the inner circumference of the yoke 20 and come to contact with the multiple yoke segments 20s, respectively. Specifically, each of the teeth segments 21s is paired with a corresponding one of the yoke segments 20s, and is arranged inward of the yoke segment 20s.

The first motor case 13 is provided on the first column-end-face 12S₁, as shown in Fig. 4. In this embodiment, the first motor case 13 includes an outer wall 13G provided along an outer circumference of the yoke 20. In the axial direction of the stator 12, a height α of the outer wall 13G is lower than a height ß of the molded portion 24. Accordingly, the outer circumferential surface 12S₃ of the stator 12 has the molded portion 24 exposed from the outer wall 13G. A structure of the outer wall 13G will be described later.

The second motor case 14 is provided on the second column-end-face 12S₂. The motor shaft 11 is inserted into the second motor case 14. The first motor case 13 and the second motor case 14 are coupled to each other with screws or the like.

The terminal box 15 houses the motor power line 9 therein. In this embodiment, the terminal box 15 is attached to the first motor case 13 and the second motor case 14.

The rotor 16, the gear shaft 17 and the gear 18 are arranged inside the stator 12. The rotor 16 is configured to rotate about the shaft axis S inside the stator 12. The revolution of the rotor 16 is transmitted to the gear shaft 17 disposed along the shaft axis S. The gear 18 is configured to transmit the revolution of the rotor 16 which is thus transmitted via the gear shaft 17, to the motor shaft 11, while reducing the revolution by a predetermined reduction ratio.

### (Structure of Outer wall)

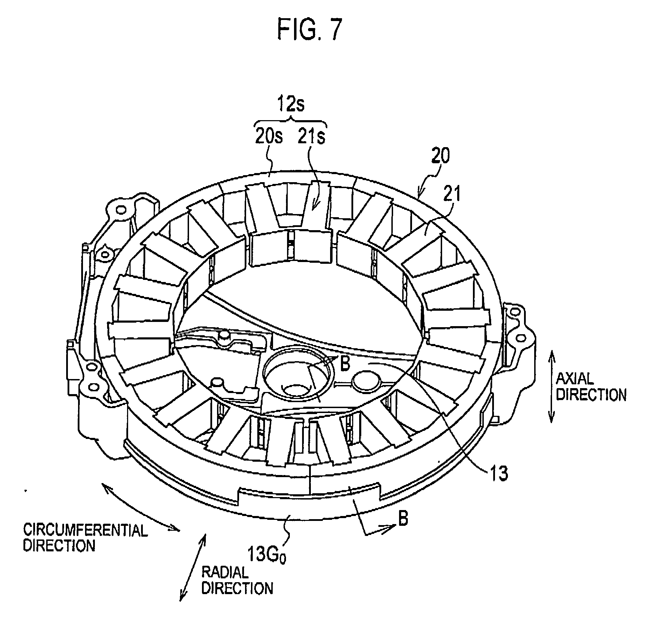

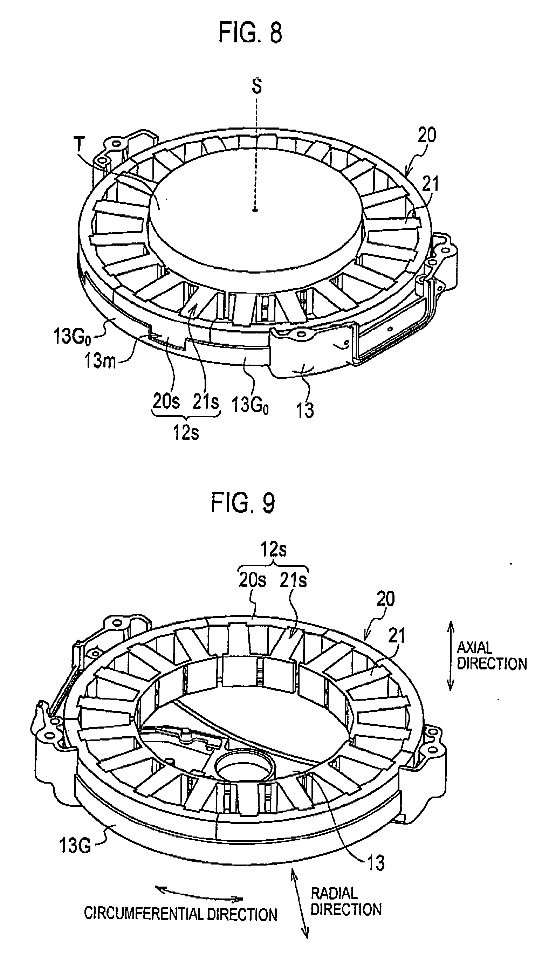

Next, a structure of the outer wall 13G will be described with reference to the drawings. Fig. 6 is a perspective view showing a structure of the outer wall 13G. Figs. 7 and 8 are perspective views showing states in which the first motor case 13 is fitted to the yoke 20.

As shown in Fig. 6, the outer wall 13G includes multiple outer-circumference guide portions 13Go and multiple cut-out portions 13m. The cut-out portions 13m are each continuous with its adjacent outer-circumference guide portions 13Go.

As shown in Figs. 7 and 8, in this embodiment, each of the outer-circumference guide portions 13Go is extended along outer circumferences of two adjacent ones of the yoke segments 20s. In other words, the outer-circumference guide portion 13Go is provided outward of a boundary of the two yoke segments 20s in a radial direction of the stator 12.

Note that no cut-out portion 13m is formed outward of the boundary of the two yoke segments 20s. Incidentally, although not illustrated, the cut-out portion 13m is filled with the molded portion 24.

Meanwhile, the inner diameter of the outer wall 13G is larger than the outer diameter of the yoke 20. However, a gap between the outer wall 13G and the yoke 20 is preferably formed small.

Note that, in the axial direction of the stator 12, the height α of the outer wall 13G is lower than a height γ of the yoke 20 in this embodiment (see Fig. 4). In addition, the height α of the outer wall 13G is lower than the height ß of the molded portion 24, as described above.

### (Method of Manufacturing Stator)

Next, a method of manufacturing the stator 12 will be described with reference to the drawing.

Firstly, the multiple yoke segments 20s and the multiple teeth segments 21s are prepared. Each of the teeth segments 21s includes the multiple teeth 21, and the insulating members 22 and the coils 23 have been respectively attached to the multiple teeth 21.

Next, the teeth segments 21s come to contact with the respective yoke segments 20s, and thereby the multiple stator segments 12s are formed. At this point, the teeth segments 21s are preferably fitted into the respective yoke segments 20s. However, the way of contacting is not limited to this.

Subsequently, the multiple stator segments 12s are combined with each other into an annular shape, and then fitted into the first motor case 13. At this point, each outer-circumference guide portion 13Go of the first motor case 13 is disposed outward of a boundary of two of the yoke segments 20s (see Fig. 7).

Then, the multiple stator segments 12s and the first motor case 13 are placed between an upper mold and a lower mold while being held therebetween. At this point, as shown in Fig. 8, a columnar portion T is formed on part of the upper mold or the lower mold, and then is fitted inside the multiple stator segments 12s.

Thereafter, the multiple stator segments 12s are molded by injecting a resin material between the upper mold and the lower mold. Thereby, the molded portion 24 is formed.

### (Advantageous Effects)

In the molded motor 10 according to First Embodiment, the height α of the outer wall 13G is lower than the height 6 of the molded portion 24. This makes it possible for the outer circumferential surface 12S₃ of the stator 12 to have the molded portion 24 exposed to the outside. Accordingly, heat generated inside the stator 12 can be radiated directly to the air from the molded portion 24. Consequently, the heat radiation of the stator 12 can be improved, as compared to a case where the molded portion 24 is covered with the first motor case 13 or the second motor case 14.

In addition, the outer wall 13G includes the multiple outer-circumference guide portions 13Go each extended along the outer circumferences of the two adjacent yoke segments 20s. Since the outer-circumference guide portion 13Go is provided outward of the boundary of the two yoke segments 20s in this manner, it is possible to inhibit the two yoke segments 20s from being shifted from each other due to an injection pressure of the resin material in forming the molded portion 24.

Moreover, the outer wall 13G includes the cut-out portions 13m which are each continuous with its adjacent outer-circumference guide portions 13Go. Each cut-out portion 13m is filled with the molded portion 24, and thus part of the molded portion 24 corresponding to the cut-out portion 13m exhibits an anchoring effect exerted on the outer-circumference guide portion 13Go. Accordingly, it is possible to inhibit the stator 12 from rotating in the circumferential direction thereof.

Furthermore, since the first motor case 13 is arranged on an opposite side of the stator 12 from the rear wheel 3, the molded portion 24 is exposed from the outer wall 13G on the rear wheel 3 side of the stator 12. Accordingly, even on the rear wheel 3 side through which air flows relatively weekly, the heat radiation of the stator 12 can be improved.

Besides, in the method of manufacturing the stator 12 according to First Embodiment, the columnar portion T of the mold is fitted inside the multiple stator segments 12s when the resin material is injected between the upper mold and the lower mold. Accordingly, it is possible to inhibit the multiple stator segments 12s from being shifted from each other due to an injection pressure of the resin material in forming the molded portion 24.

### [Second Embodiment]

Next, a molded motor 10 according to Second Embodiment of the present invention will be described with reference to the drawing. Hereinbelow, a description will be given mainly of a difference from First Embodiment described above.

Fig. 9 is a perspective view showing a state in which the first motor case 13 is fitted to the yoke 20.

As shown in Fig. 9, an outer wall 13G according to Second Embodiment is provided annularly in the circumferential direction of the stator 12. Specifically, the outer wall 13G is formed into a cylindrical shape and extends approximately all over the circumferences of the multiple yoke segments 20s.

### (Advantageous Effects)

In the molded motor 10 according to Second Embodiment, the outer wall 13G is provided annularly in the circumferential direction of the stator 12.

The outer wall 13G surrounds the outer circumferences of the multiple yoke segments 20s in a uniform manner as described above. Thus, heat generated inside the stator 12 can be radiated from each of the multiple yoke segments 20s through the molded portion 24 in an approximately equal manner. Consequently, it is possible to reduce the variation in temperature among the coils 23 respectively wound around the multiple teeth 21.

### [Third Embodiment]

Next, a molded motor 10 according to Third Embodiment of the present invention will be described with reference to the drawing. Hereinbelow, a description will be given mainly of a difference from First Embodiment described above.

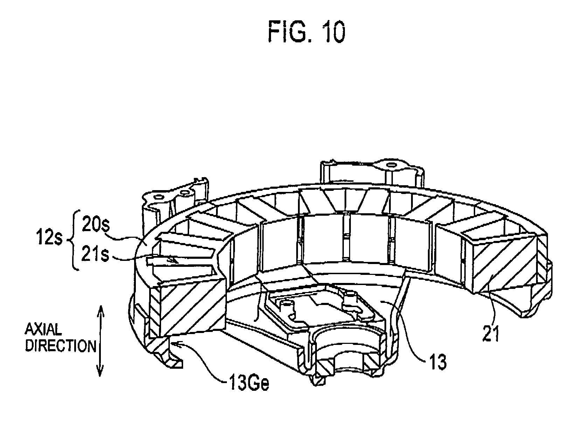

Fig. 10 is a cross sectional view taken along the B-B line of Fig. 7. As shown in Fig. 10, the first motor case 13 includes end-face guide portions 13Ge. Each of the end-face guide portions 13Ge is extended along an end face of the yoke segment 20s in the axial direction and an end face of the tooth 21 in the axial direction which comes to contact with the yoke segment 20s. This makes the end face of the yoke segment 20s and the end face of the tooth 21 flush with each other.

### (Advantageous Effects)

The first motor case 13 according to Third Embodiment includes the end-face guide portions 13Ge each extended along the end face of the yoke segment 20s in the axial direction and the end face of the tooth 21 in the axial direction which comes to contact with the yoke segment 20s. Accordingly, it is possible to inhibit the tooth 21 from being shifted from the yoke segment 20s due to an injection pressure of the resin material in forming the molded portion 24.

### [Fourth Embodiment]

Next, a molded motor 10 according to Fourth Embodiment of the present invention will be described with reference to the drawings. Hereinbelow, a description will be given mainly of a difference from First Embodiment described above.

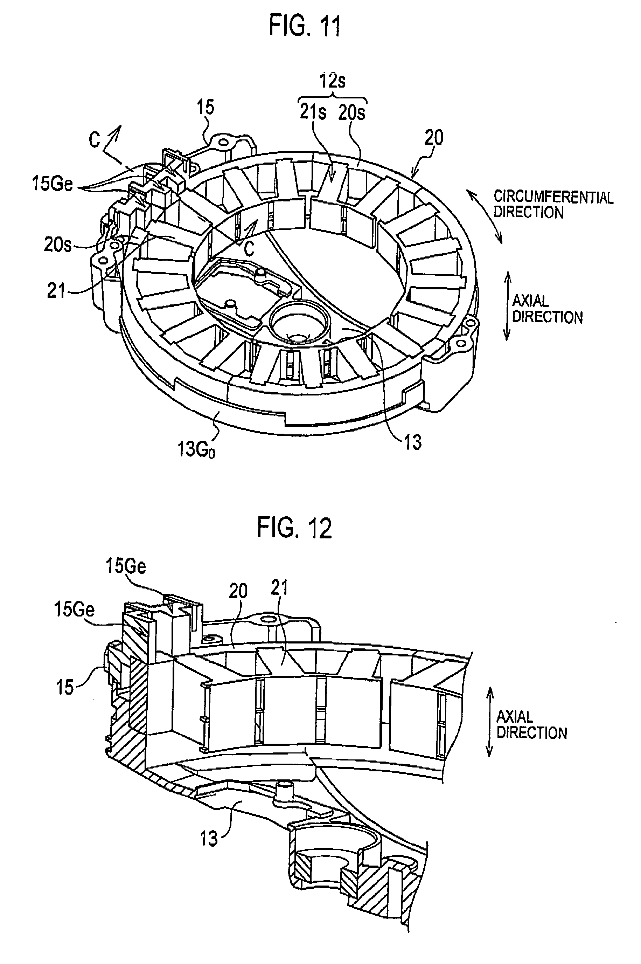

Fig. 11 is a perspective view showing a state in which a terminal box 15 is fitted to the yoke 20. Fig. 12 is a cross sectional view taken along the C-C line of Fig. 11.

As shown in Figs. 11 and 12, the terminal box 15 includes an end-face guide portion 15Ge, which comes to contact with an end face of one of the yoke segments 20s in the axial direction.

Although not illustrated, when the molded portion 24 is formed, the terminal box 15 is fitted to the yoke 20 and placed between the upper mold and the lower mold.

### (Advantageous Effects)

The terminal box 15 according to Fourth Embodiment includes the end-face guide portion 15Ge which comes to contact with the end face of the yoke segment 20s in the axial direction. Accordingly, it is possible to inhibit the yoke segment 20s from being shifted from its corresponding teeth 21 due to an injection pressure of the resin material in forming the molded portion 24.

### (Other Embodiments)

The present invention has been described by using the foregoing embodiments. However, it should not be understood that the description and drawings which constitute part of this disclosure limit the present invention. From this disclosure, various alternative embodiments, examples and operation techniques will be easily found by those skilled in the art.

For example, in the foregoing embodiments, the outer wall 13G is provided to the first motor case 13, but may be provided to the second motor case 14.

In Third Embodiment described above, the end-face guide portions 13Ge are provided to the first motor case 13, but may be provided to the second motor case 14.

In Fourth Embodiment described above, the end-face guide portion 15Ge comes to contact with the end face of the one yoke segment 20s in the axial direction. However, the structure is not limited to this. The end-face guide portion 15Ge may be formed annularly in the circumferential direction to come to contact with an end face of each yoke segment 20s.

As described above, it should be understood that the present invention includes various embodiments which are not described herein. Accordingly, the present invention should be determined only by the matters to define the invention in the scope of claims regarded as appropriate based on the disclosure.

## Claims

1. A molded motor comprising:
a stator of columnar shape; and
a motor case provided on an end face of the stator, wherein
the stator includes
a plurality of yoke segments arranged in a circumferential direction of the stator, and
a molded portion configured to mold the plurality of yoke segments,
the motor case has an outer wall provided along outer circumferences of the plurality of yoke segments, and
the outer wall is lower in height in an axial direction of the stator than the molded portion.

2. The molded motor according to claim 1, wherein the outer wall is provided annularly in the circumferential direction.

3. The molded motor according to claim 1, wherein
the outer wall includes an outer-circumference guide portion and a cut-out portion, the outer-circumference guide portion being extended along outer circumferences of two of the plurality of yoke segments, the cut-out portion being continuous with the outer-circumference guide portion, and
the molded portion is filled into the cut-out portion.

4. The molded motor according to claim 1, wherein the motor case includes an end-face guide portion extended along an end face of one of the yoke segments in the axial direction and an end face of a tooth in the axial direction which comes to contact with the one yoke segment.

5. The molded motor according to claim 1, further comprising a terminal box configured to house a power cable, wherein
the terminal box includes an end-face guide portion which comes to contact with an end face of one of the yoke segments in the axial direction.

6. An electric motor vehicle comprising:
a drive wheel; and
a molded motor configured to drive the drive wheel, wherein
the molded motor includes
a stator of columnar shape, and
a motor case provided on an end face of the stator on the drive wheel side,
the stator includes
a plurality of yoke segments arranged in a circumferential direction of the stator, and
a molded portion configured to mold the plurality of yoke segments,
the motor case has an outer wall provided along outer circumferences of the plurality of yoke segments, and
the outer wall is lower in height in an axial direction of the stator than the molded portion.
